# EUROPEAN PATENT SPECIFICATION

(11) **EP 4 339 858 B1**
(45) Date of publication and mention of the grant of the patent: **18.03.2026**
(21) Application number: 23190193.5
(22) Date of filing: 08.08.2023
(51) Int. Cl.: G06Q 10/06, G06Q 10/063, H04L 41/142

(54) **WORK STATUS MONITORING SYSTEM, WORK STATUS MONITORING METHOD, AND WORK STATUS MONITORING PROGRAM**
ARBEITSSTATUSÜBERWACHUNGSSYSTEM, ARBEITSSTATUSÜBERWACHUNGSVERFAHREN UND ARBEITSSTATUSÜBERWACHUNGSPROGRAMM
SYSTÈME DE SURVEILLANCE D'ÉTAT DE TRAVAIL, PROCÉDÉ DE SURVEILLANCE D'ÉTAT DE TRAVAIL ET PROGRAMME DE SURVEILLANCE D'ÉTAT DE TRAVAIL

(30) Priority: 14.09.2022 JP 2022146491
(43) Date of publication of application: 20.03.2024
(73) Proprietor: TOYOTA JIDOSHA KABUSHIKI KAISHA, Toyota-shi, Aichi-ken, 471 8571 (JP)
(72) Inventor: YOSHIZAWA, Shintaro, Toyota-shi, 471-8571 (JP)
(74) Representative: D Young & Co LLP

(56) References cited:
- US-A1- 2021 350 293
- US-A1- 2022 215 327
- US-B2- 10 540 224

## Description

### BACKGROUND

The present disclosure relates to a work status monitoring system, a work status monitoring method, and a work status monitoring program.

In recent years, there has been a demand that the status of a plurality of items of work performed in a work area be efficiently monitored. The related art is disclosed, for example, in Japanese Unexamined Patent Application Publication No. 2020-184250.

Japanese Unexamined Patent Application Publication No. 2020-184250 discloses a work analysis device that analyzes work including a plurality of processes. This work analysis device includes a reception unit configured to receive a captured image of a work area, a detector unit configured to parse the captured image and detect the position and orientation of a worker working in the work area, a determination unit configured to determine the process being performed by the worker on the basis of the position and orientation of the worker, and a generation unit configured to measure a work time for each of the processes and generate a time chart representing the processes in the work step carried out by the worker.

US 2022/0215327 Al relates to a work analysis device configured to analyze a work step.

US 10,540,224 B2 relates to event relationship analysis in fault management.

US 2021/0350293 Al relates to systems and methods for message-based control and monitoring of a business process.

### SUMMARY

However, in the work analysis device disclosed in Japanese Unexamined Patent Application Publication No. 2020-184250, for example, when work including a plurality of processes is performed by a plurality of workers, the amount of information indicated in a time chart increases. Thus, there is a problem that it is difficult to specify notable events such as occurrences of abnormalities.

The present disclosure has been made in view of the aforementioned circumstances and an object thereof is to provide a work status monitoring system, a work status monitoring method, and a work status monitoring program that are capable of preventing specification of notable events from being difficult to perform.

A work status monitoring system according to the present disclosure includes: an event detection unit configured to detect a plurality of events that have occurred in a work area; a network generation unit configured to generate an event network composed of a plurality of nodes indicating the plurality of events detected by the event detection unit and a plurality of edges indicating an order of generation of the plurality of nodes; an adjustment unit configured to adjust a resolution of the event network generated by the network generation unit to a specified resolution; a conversion unit configured to convert the event network of which the resolution has been adjusted by the adjustment unit into information indicating a relationship of an order of occurrences of a plurality of events; and an output unit configured to output a result of the conversion by the conversion unit. The work status monitoring system adjusts a resolution of information about a work status, such as a DSM, to be presented to a user to a desired resolution, whereby it is possible to prevent specification of notable events, such as occurrences of abnormalities, from being difficult to perform even when, for example, there is a complicated work situation where a plurality of items of work are performed by a plurality of workers or work robots in a work area.

The conversion unit may convert the event network of which the resolution is adjusted by the adjustment unit into a Design Structure Matrix (DSM), the DSM being the information indicating a relationship of an order of occurrences of the plurality of events, and the output unit may output information about the DSM.

The output unit may output, as the information about the DSM, both the DSM generated based on the plurality of events detected by the event detection unit and a DSM of a preset standard.

The output unit may output, as the information about the DSM, a status of a change in the DSM through a repetition of items of work.

The output unit may display the information about the DSM on a monitor.

The adjustment unit may combine nodes of events related within a specified degree of relation among the plurality of nodes into one node.

The adjustment unit may determine whether or not a first event represented by a first node, the first node being any one of the plurality of nodes, and a second event represented by a second node, the second node being another one of the plurality of nodes, are related within the specified degree of relation based on at least one of an object involved in an occurrence of each of the first and the second events, a time when each of the first and the second events has occurred, and a place where each of the first and the second events has occurred.

The event detection unit may detect the plurality of events that have occurred in the work area from a result of a detection by a distance measurement sensor or an image captured by a camera, for example, by using a trained model such as a neural network trained by deep learning.

A work status monitoring method according to the present disclosure is a work status monitoring method performed by a computer, the work status monitoring method including: detecting a plurality of events that have occurred in a work area; generating an event network composed of a plurality of nodes indicating the plurality of detected events and a plurality of edges indicating an order of generation of the plurality of nodes; adjusting a resolution of the generated event network to a specified resolution; converting the event network of which the resolution has been adjusted into information indicating a relationship of an order of occurrences of a plurality of events; and outputting the information indicating a relationship of an order of occurrences of a plurality of events. The work status monitoring method adjusts a resolution of information about a work status, such as a DSM, to be presented to a user to a desired resolution, whereby it is possible to prevent specification of notable events, such as occurrences of abnormalities, from being difficult to perform even when, for example, there is a complicated work situation where a plurality of items of work are performed by a plurality of workers or work robots in a work area.

A work status monitoring program according to the present disclosure causes a computer to: detect a plurality of events that have occurred in a work area; generate an event network composed of a plurality of nodes indicating the plurality of detected events and a plurality of edges indicating an order of generation of the plurality of nodes; adjust a resolution of the generated event network to a specified resolution; convert the event network of which the resolution has been adjusted into information indicating a relationship of an order of occurrences of a plurality of events; and output the information indicating a relationship of an order of occurrences of a plurality of events. The work status monitoring program adjusts a resolution of information about a work status, such as a DSM, to be presented to a user to a desired resolution, whereby it is possible to prevent specification of notable events, such as occurrences of abnormalities, from being difficult to perform even when, for example, there is a complicated work situation where a plurality of items of work are performed by a plurality of workers or work robots in a work area.

According to the present disclosure, it is possible to provide a work status monitoring system, a work status monitoring method, and a work status monitoring program that are capable of preventing specification of notable events from being difficult to perform.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a block diagram showing an example of a configuration of a work status monitoring system according to a first embodiment;
Fig. 2 is a diagram showing an example of a work area to which the work status monitoring system shown in Fig. 1 is applied;
Fig. 3 is a conceptual diagram showing an example of multidimensional array data in a recording format of an event detected in the work status monitoring apparatus shown in Fig. 1;
Fig. 4 is a diagram showing an example of a log of events represented by referring to multidimensional array data;
Fig. 5 is a diagram showing an example of an event network generated in the work status monitoring apparatus shown in Fig. 1;
Fig. 6 is a diagram showing an example of contents of an adjustment of a resolution of an event network performed by the work status monitoring apparatus shown in Fig. 1;
Fig. 7 is a diagram showing an example of a Design Structure Matrix (DSM) generated in the work status monitoring apparatus shown in Fig. 1;
Fig. 8 is a diagram for explaining how to view a DSM;
Fig. 9 is a diagram for explaining how to view a DSM;
Fig. 10 is a diagram for explaining how to view a DSM;
Fig. 11 is a diagram showing an example of DSMs accumulated through a repetition of items of work; and
Fig. 12 is a flowchart showing operations performed by the work status monitoring system shown in Fig. 1.

### DESCRIPTION OF EMBODIMENTS

The present disclosure will be described hereinafter with reference to an embodiment of the present disclosure. However, the following embodiment is not intended to limit the scope of the disclosure according to the claims. Further, all the components/structures described in the embodiment are not necessarily indispensable as means for solving the problem. For the clarification of the description, the following descriptions and the drawings are partially omitted and simplified as appropriate. The same elements are denoted by the same reference numerals or symbols throughout the drawings, and redundant descriptions are omitted as necessary.

### <First Embodiment>

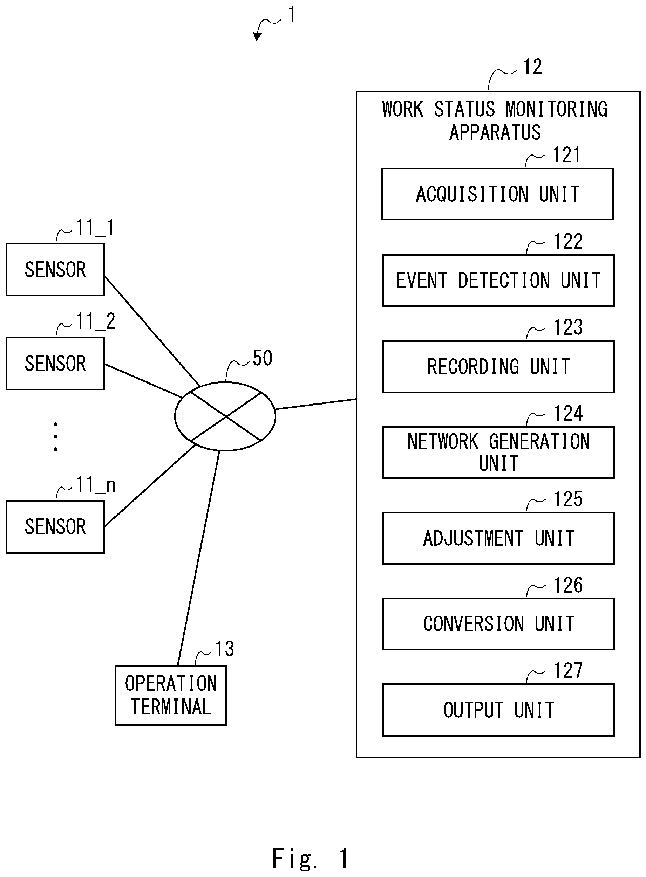

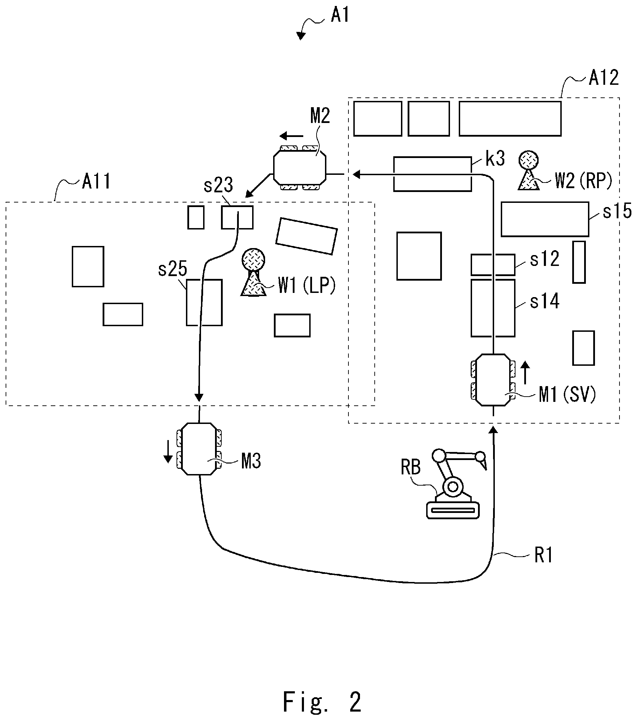

Fig. 1 is a block diagram showing an example of a configuration of a work status monitoring system 1 according to a first embodiment. Further, Fig. 2 is a diagram showing an example of a work area to which the work status monitoring system 1 is applied. The work status monitoring system 1 according to this embodiment is a system that monitors work statuses of a plurality of items of work performed in a predetermined work area such as a factory. Note that the work status monitoring system 1 according to this embodiment adjusts a resolution of information about a work status, such as a DSM, to be presented to a user to a desired resolution, whereby it is possible to prevent specification of notable events, such as occurrences of abnormalities, from being difficult to perform even when, for example, there is a complicated work situation where a plurality of items of work are performed by a plurality of workers or work robots in a work area.

Specifically, the work status monitoring system 1 is applied to a work area A1 and includes n (n is an integer of one or greater) sensors 11_1 to 11_n, a work status monitoring apparatus 12, an operation terminal 13, and a network 50. A single work status monitoring apparatus 12 can also be referred to as a work status monitoring system. The work status monitoring apparatus 12, the sensors 11_1 to 11_n, and the operation terminal 13 are configured so that they can communicate with each other through the wired or the wireless network 50. Note that, in this embodiment, a description will be given of a case in which the work status monitoring apparatus 12 and the operation terminal 13 are separately provided. However, the present disclosure is not limited thereto; for example, the work status monitoring apparatus 12 may have the functions of the operation terminal 13. That is, the work status monitoring apparatus 12 and the operation terminal 13 may be integrally formed.

The operation terminal 13 is a terminal capable of performing communication owned by a user or temporarily assigned to a user, such as a Personal Computer (PC) terminal, a mobile terminal such as a smartphone or a tablet terminal, or a dedicated communication terminal prepared for the work status monitoring system 1.

For example, a user such as a manager who monitors the status of work performed in a work area to which the work status monitoring system 1 is applied inputs, to the operation terminal 13, information about the work content of each item of work, workers, work robots, vehicles, equipment such as a working table and a parts storage area, work objects, and the like by operating an operation screen, a keyboard, or the like of the operation terminal 13. The operation terminal 13 receives these pieces of information and transmits them to the work status monitoring apparatus 12 through the network 50. Further, the operation terminal 13 receives information about the work status in the work area such as a Design Structure Matrix (DSM) output from the work status monitoring apparatus 12 through the network 50 and displays it on a monitor or the like.

The sensors 11_1 to 11_n are installed on the ceiling or the like of the work area A1 and detects workers, work robots, vehicles, equipment, work objects, and the like present in the work area A1.

The vehicles are, for example, vehicles such as forklifts and moving carriages to convey products and their parts, or vehicles (Automatic Guided Vehicles (AGVs)) set so as to automatically travel along a predetermined travel route. Further, the work robot is, for example, an Autonomous Mobile Robot (AMR) set so as to automatically perform a predetermined work.

In the example shown in Fig. 2, a worker W1, a worker W2, vehicles M1 to M3, which are AGVs, and a work robot RB present in the work area A1. The vehicles M1 to M3 are used as moving carriages that carry work objects and move along a looped travel route R1. Note that, in Fig. 2, a detection area A11 of the sensor 11_1 and a detection area A12 of the sensor 11_2 are shown as examples.

The sensors 11_1 to 11_n are, for example, cameras and are installed so that they can capture the work area A1. Note that the sensors 11_1 to 11_n are not limited to being cameras, and may instead be sensors of any kind, such as distance measurement sensors, which can detect workers, work robots, vehicles, equipment, work objects, and the like in the work area A1.

The work status monitoring apparatus 12 monitors work statuses of a plurality of items of work performed in the work area A1. Specifically, the work status monitoring apparatus 12 includes an acquisition unit 121, an event detection unit 122, a recording unit 123, a network generation unit 124, an adjustment unit 125, a conversion unit 126, and an output unit 127.

The acquisition unit 121 acquires information transmitted from the operation terminal 13. Specifically, the acquisition unit 121 acquires information about the work content of each item of work, workers, work robots, vehicles, equipment such as a working table and a parts storage area, work objects, and the like. The information about a worker may include the level of proficiency of the worker. Note that when the work status monitoring apparatus 12 has a function of automatically extracting information acquired by the acquisition unit 121, the acquisition unit 121 may not be included.

The event detection unit 122 detects a plurality of events that have occurred in the work area A1 based on results of the detection by the sensors 11_1 to 11_n. Note that the event is a predetermined work performed by, for example, any of the workers W1 and W2, the work robot RB, and the vehicles M1 to M3. The event includes objects (including workers, work robots, and vehicles) that have caused the occurrence of the event, the place where the event has occurred, the time when the event has occurred, and the work object for which the predetermined work has been performed.

Specifically, the event detection unit 122 periodically extracts objects (workers, work robots, vehicles, equipment such as a working table and a parts storage area, work objects, and the like) in the work area A1, and detects events caused by the objects from the periodically extracted information (e.g., the status of the change in each of the objects).

For example, the event detection unit 122 detects, as an event, the fact that the worker W1 (LP) has performed predetermined processing on the work object placed on any of the vehicles M1 to M3 parked at a position s23 or a position s25. The event detection unit 122 also detects, as an event, the fact that the worker W2 (RP) has performed predetermined processing on the work object placed on any of the vehicles M1 to M3 parked at a position s14 or a position s12. Alternatively, the event detection unit 122 detects, as an event, the fact that the workers W1 and W2 have cooperatively performed predetermined processing on the work object placed on any of the vehicles M1 to M3 parked at a position k3.

Note that the event detection unit 122 may specify each object from results of the detection by the sensors 11_1 to 11_n and detect the event by using a trained model. Note that the trained model is a neural network that is trained by training data, which is a combination of results of the detection by the sensors 11_1 to 11_n and the ground truth values of the objects included in the results of the detection. The trained model is preferably a neural network that is trained by deep learning.

Alternatively, the event detection unit 122 may refer to the information about each object acquired by the acquisition unit 121, specify each object from results of the detection by the sensors 11_1 to 11_n, and detect the event.

A plurality of events detected by the event detection unit 122 are recorded in the recording unit 123 in the form of multidimensional array data.

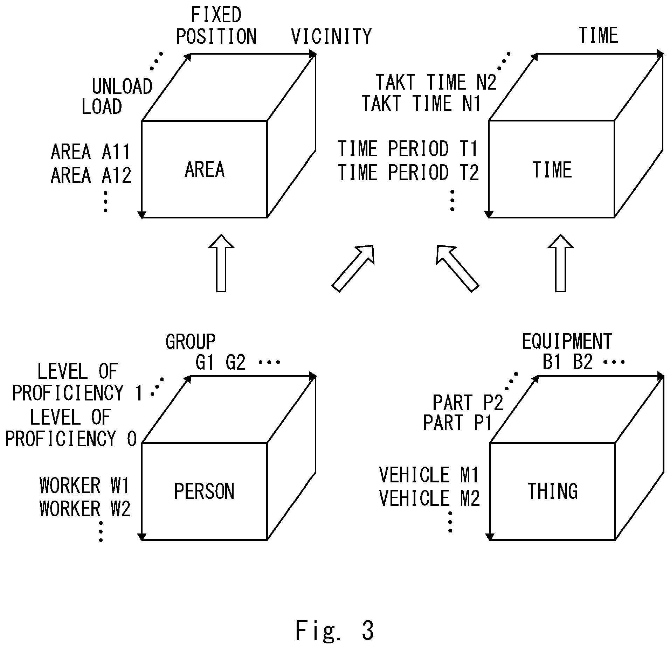

Fig. 3 is a conceptual diagram showing an example of multidimensional array data in a recording format of an event detected by the event detection unit 122. The multidimensional array data is also referred to as tensor data. Fig. 3 shows three-dimensional array data as an example of multidimensional array data. As shown in Fig. 3, in the three-dimensional array data about a "person" such as a worker, the first item indicates the "person" identification (ID), the second item indicates the level of proficiency of the "person", and the third item indicates the group to which the "person" belongs. Further, in the three-dimensional array data about a "thing", the first item indicates which of a plurality of vehicles the "thing" corresponds, the second item indicates which of a plurality of parts the "thing" corresponds, and the third item indicates which of a plurality of pieces of equipment the "thing" corresponds. Further, in the three-dimensional array data about an "area", the first item indicates which of a plurality of areas composing the work area A1 the "area" where the event has occurred corresponds, the second item indicates the specific content of the event that has occurred in the "area" where the event has occurred, and the third item indicates the degree of deviation between the "area" where the event has occurred and the event occurrence area in normal times. Further, in the three-dimensional array data about a "time", the first item indicates the time period when the event has occurred, the second item indicates what number takt time the takt time when the event has occurred is, and the third item indicates the time when the event has occurred. The above pieces of three-dimensional array data are associated with each other. Note that each item of the multidimensional array data can be freely set. Each event detected by the event detection unit 122 is recorded in the recording unit 123 in the form of multidimensional array data as shown in Fig. 3.

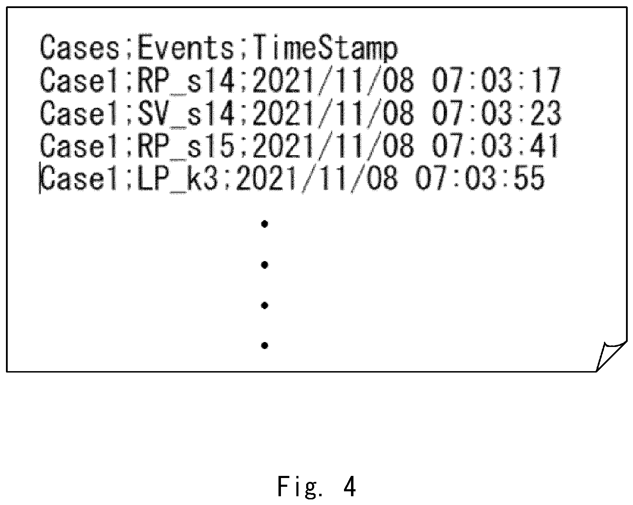

Fig. 4 is a diagram showing an example of a log of events represented by referring to multidimensional array data. As shown in Fig. 4, an event "RP_s14" occurred at 7:03:17 a.m. on November 8, 2021. Note that the event "RP_s14" indicates that work has been performed at the position s14 by the worker W2. Further, an event "SV _s14" occurred at 7:03:23 a.m. on November 8, 2021. Note that the event "SV _s14" indicates that the vehicle M1 has been moved from the position s14 to a different position (e.g., a position s15). An event "RP_s15" occurred at 7:03:41 a.m. on November 8, 2021. Note that the event "RP_s15" indicates that work has been performed at the position s15 by the worker W2. Further, an event "LP_k3" occurred at 7:03:55 a.m. on November 8, 2021. Note that the event "LP_k3" indicates that work has been performed at the position k3 by the worker W1.

The network generation unit 124 refers to the multidimensional array data recorded in the recording unit 123, generates an event network NW composed of a plurality of nodes Nd indicating a plurality of events detected by the event detection unit 122 and a plurality of edges Ed indicating an order of generation of the plurality of nodes Nd.

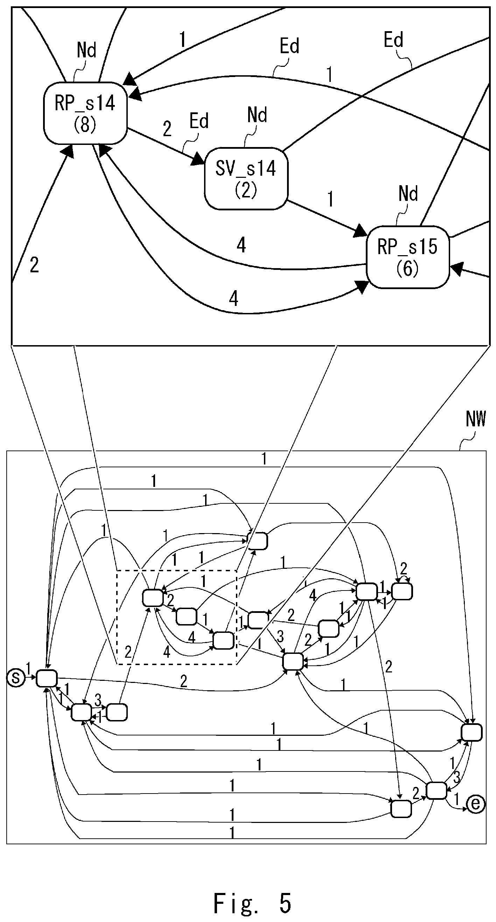

Fig. 5 is a diagram showing an example of an event network. The lower part of Fig. 5 shows an example of the event network NW regarding a predetermined work flow composed of a plurality of work processes in the work area A1. In the lower part of Fig. 5, "s" indicates the starting point of the work flow and "e" indicates the ending point of the work flow. Further, the upper part of Fig. 5 shows an enlarged view of a part of the event network NW (a region surrounded by a dotted line) shown in the lower part of Fig. 5. As shown in Fig. 5, the event network NW is composed of the plurality of nodes Nd indicating a plurality of events detected by the event detection unit 122 and the plurality of edges Ed indicating an order of generation of the plurality of nodes Nd.

As shown in Fig. 5, one of the plurality of nodes Nd indicates the event "RP_s14" described with reference to Fig. 4, and another one of the plurality of nodes Nd indicates the event "SV_s14" described with reference to Fig. 4. The number "(8)" indicated in the node Nd of the event "RP_s14" indicates the number of occurrences of the event "RP_s14". Similarly, the number "(2)" indicated in the node Nd of the event "SV _s14" indicates the number of occurrences of the event "SV_s14". Further, one of the plurality of edges Ed extends, as indicated by an arrow in Fig. 5, from the node Nd of the event "RP_s14" to the node Nd of the event "SV_s14". The number "2" on this edge Ed indicates the number of times the event "SV _s14" occurred after the event "RP_s14" occurred.

The adjustment unit 125 adjusts the resolution of the event network NW detected by the network generation unit 124 to a resolution specified by a user or the like.

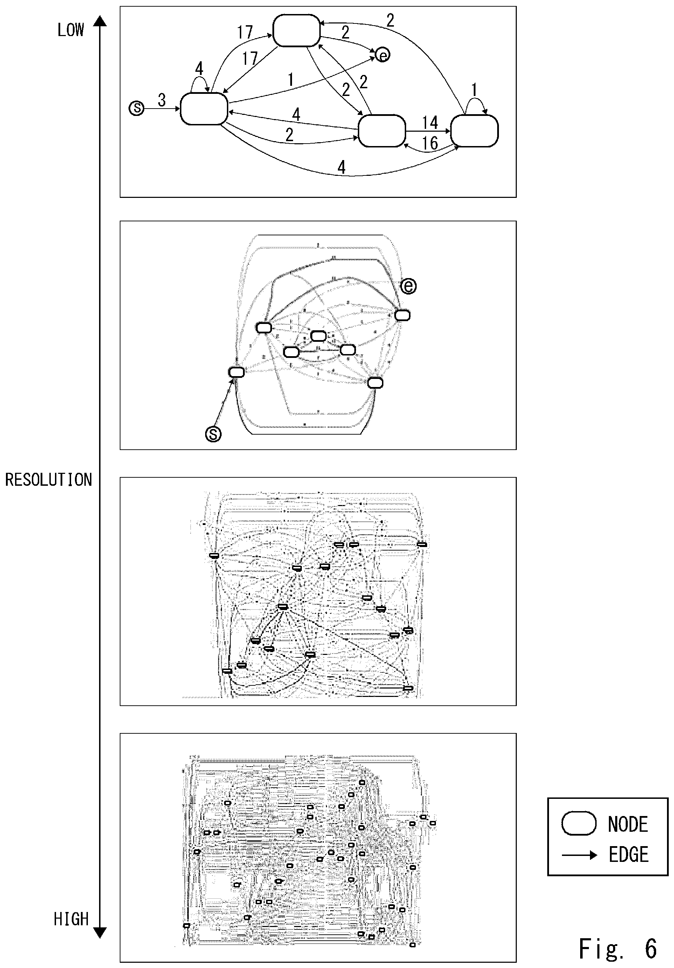

Fig. 6 is a diagram showing an example of contents of the adjustment of the resolution of the event network NW performed by the adjustment unit 125. As shown in Fig. 6, the higher the resolution, the greater the number of nodes Nd composing the event network NW, while the lower the resolution, the smaller the number of nodes Nd composing the event network NW. In other words, the higher the resolution, the greater the amount of information indicated by the event network NW, while the lower the resolution, the smaller the amount of information indicated by the event network NW. The greater the amount of information, the more detailed the analysis of the event becomes. However, when the amount of information is too large, it is difficult to specify notable events such as occurrences of abnormalities. Therefore, it is possible for the adjustment unit 125 to adjust the resolution of the event network NW detected by the network generation unit 124 to a resolution specified by a user or the like.

Note that, when the adjustment unit 125 reduces the resolution, the adjustment unit 125 combines nodes of events related within a specified degree of relation among the plurality of nodes Nd into one node. For example, the adjustment unit 125 determines whether or not an event (a first event) represented by a first node, which is one of the plurality of nodes Nd, and an event (a second event) represented by a second node, which is another one of the plurality of nodes Nd, are related within the degree of relation specified by a user or the like based on at least one of an object involved in an occurrence of each of the first and the second events, a time when each of the first and the second events has occurred, and a place where each of the first and the second events has occurred. For example, when the worker involved in the occurrence of the first event is the same as the worker involved in the occurrence of the second event, the time when the first event has occurred is close to the time when the second event has occurred, and the place where the first event has occurred is close to the place where the second event has occurred, the adjustment unit 125 combines the first and the second nodes into one node.

The conversion unit 126 converts the event network NW adjusted by the adjustment unit 125 to a desired resolution into information indicating a relationship of an order of occurrences of a plurality of events, more specifically, a DSM.

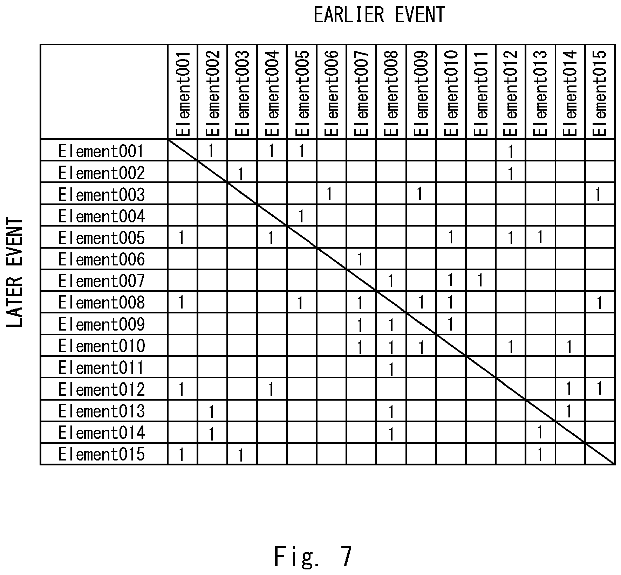

Fig. 7 is a diagram showing an example of a DSM. In the example of the DSM shown in Fig. 7, a plurality of events represented by a plurality of nodes composing the event network NW are denoted as Element001 to Element015. Further, in the example of the DSM shown in Fig. 7, the events in the columns where "1" is shown in the matrix represent earlier events, while the events in the rows respectively corresponding to these columns represent later events. For example, "1" is shown at the intersection of Element002 in the second column and Element001 in the first row. This indicates that the event Element001 occurred after the event Element002 occurred. That is, "1" in the matrix of the DSM corresponds to the edge Ed in the event network NW.

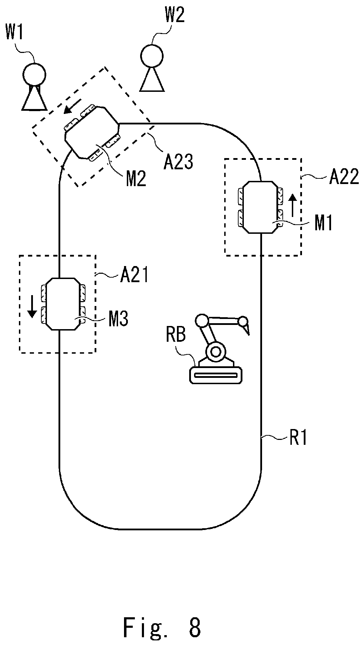

Next, how to view a DSM will be described with reference to Figs. 8 to 10. Fig. 8 shows a part of the work area shown in Fig. 2 in a simplified manner.

In the example of Fig. 8, three vehicles M1 to M3 used as moving carriages are moving along the looped travel route R1. A work object to be processed by the work robot RB and the workers W1 and W2 is placed on each of the vehicles M1 to M3.

Note that, in the example of Fig. 8, the contents of a plurality of items of work composing a work flow are as follows.
Work 1: The workers W1 and W2 process a work object placed on the vehicle M2 at a place A23.
Work 2: The vehicle M1 stops at a place A22.
Work 3: The worker W2 moves to the place A22.
Work 4: The worker W2 removes a part P1 from the work object placed on the vehicle M1 at the place A22.
Work 5: The vehicle M3 stops at a place A21.
Work 6: The worker W1 moves to the place A21.
Work 7: The worker W1 attaches a part P2 to the work object placed on the vehicle M3 at the place A21.

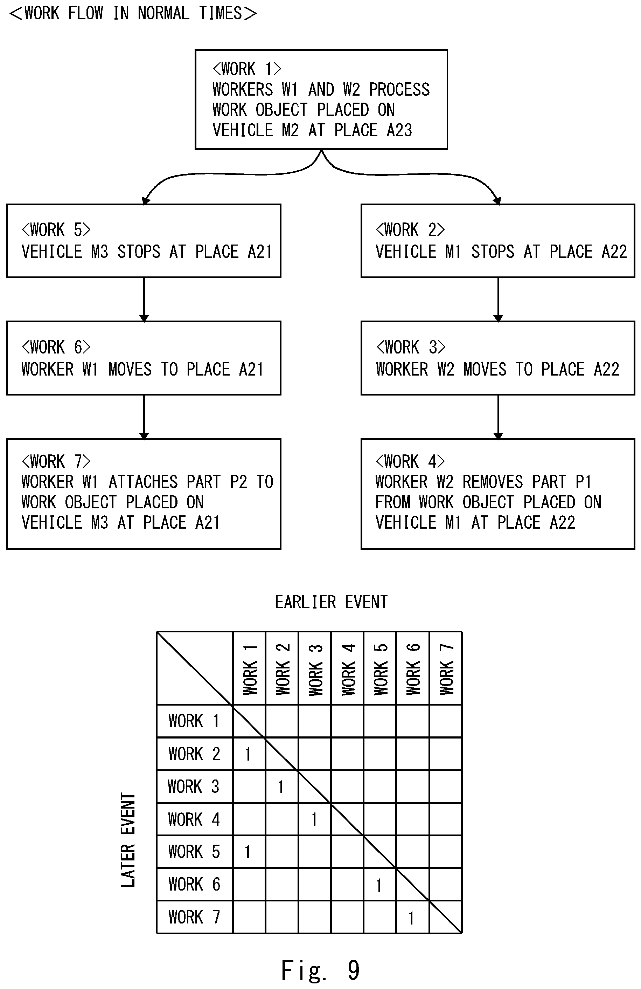

Fig. 9 shows a work flow of the items of work 1 to 7 in normal times and a DSM generated based on the work flow. Specifically, in the example of Fig. 9, the work 1 was performed first, and then the work 2 and the work 5 were performed. After the work 2 was performed, the work 3 and the work 4 were performed successively. Further, the work 5 was performed, and then the work 6 and the work 7 were performed successively. No reversion occurred in the DSM at this time.

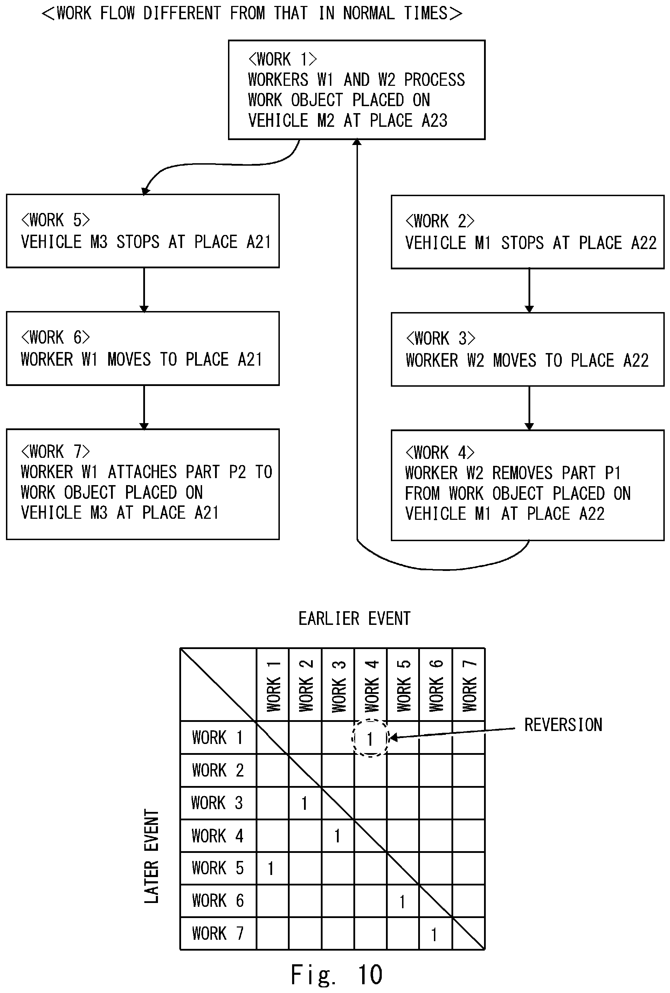

Fig. 10 shows a work flow of the items of work 1 to 7, which is different from that in normal times, and the DSM generated based on the work flow. Specifically, in the example of Fig. 10, the work 2 was performed first, and then the work 3 and the work 4 were performed successively. Then, the work 1 was performed. After the work 1 was performed, the work 5, the work 6, and the work 7 were performed successively. That is, in the example of Fig. 10, the work 2, the work 3, and the work 4 were performed before the work 1 was performed since the worker W1 was delayed in arriving at the place A23 and it was difficult to perform the work 1. Reversion occurred in the DSM at this time. For example, although this reversion is acceptable when the level of proficiency of the worker W2 is high, it is not desirable when the level of proficiency of the worker W2 is low. For example, from the DSM, a user or the like can investigate the effect of an undesirable reversion on other items of work or investigate the cause of the occurrence of an undesirable reversion.

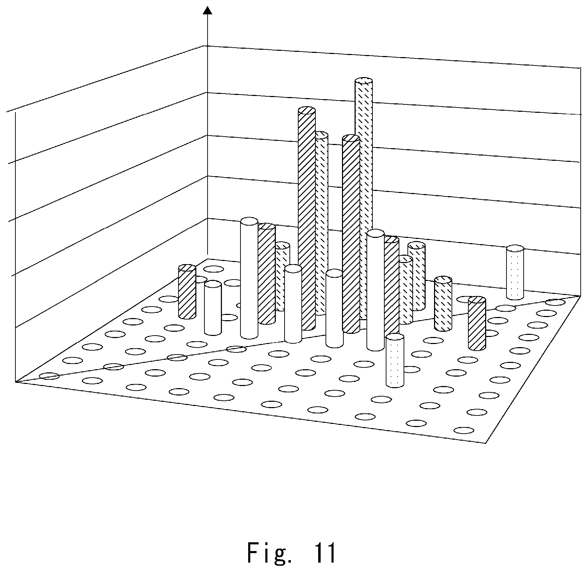

Fig. 11 is a diagram showing an example of DSMs accumulated through a repetition of items of work. The axis in the height direction indicates the amount of accumulation of "1" (the edge Ed in the event network NW) in the matrix of the DSM.

The output unit 127 outputs, for example, information about the DSM generated by the conversion unit 126 as shown in Fig. 11. The information output by the output unit 127 is transferred to the operation terminal 13, for example, through the network 50, and displayed on a monitor of the operation terminal 13. By this configuration, a user or the like can analyze events occurred by the work performed in the work area A1.

For example, the output unit 127 may output, as information about the DSM, both a DSM (i.e., a DSM generated based on a plurality of events detected by the event detection unit 122) generated based on the actual work and a DSM of a preset standard. By doing so, a user or the like can compare the DSM generated based on the actual work with the DSM of a preset standard, and analyze, for example, whether abnormalities or work delays have occurred regarding the large differences between them found by this comparison.

Alternatively, the output unit 127 may output, as information about the DSM, the status of the change in the DSM (the tendency to accumulate information) due to a repetition of items of work. By doing so, a user or the like can analyze, for example, whether a machine has failed or a worker's fatigue has increased due to the change in the work status through a repetition of items of work.

As described above, the work status monitoring system 1 according to this embodiment adjusts a resolution of information about a work status, such as a DSM, to be presented to a user to a desired resolution, whereby it is possible to prevent specification of notable events, such as occurrences of abnormalities, from being difficult to perform even when, for example, there is a complicated work situation where a plurality of items of work are performed by a plurality of workers or work robots in a work area.

### (Operations performed by the work status monitoring system 1)

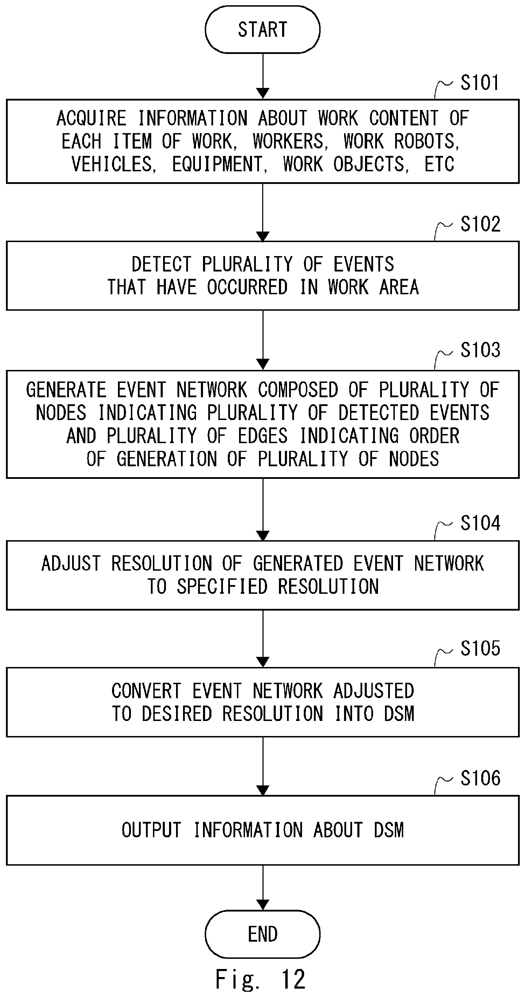

Next, operations performed by the work status monitoring system 1 will be described with reference to Fig. 12. Fig. 12 is a flowchart showing the operations performed by the work status monitoring system 1.

In the work status monitoring system 1, the work status monitoring apparatus 12 first acquires information transmitted from the operation terminal 13 about the work content of each item of work, workers, work robots, vehicles, equipment such as a working table and a parts storage area, work objects, and the like (Step S101). Note that the work status monitoring apparatus 12 may acquire these pieces of information through the operation terminal 13, or it may have a function of automatically extracting these pieces of information from, for example, results of the detection by the sensors 11_1 to 11_n.

Then, the work status monitoring apparatus 12 detects a plurality of events that have occurred in the work area A1 based on results of the detection by the sensors 11_1 to 11_n (Step S102).

Then, the work status monitoring apparatus 12 generates the event network NW composed of a plurality of nodes Nd indicating a plurality of detected events and a plurality of edges Ed indicating an order of generation of the plurality of nodes Nd (Step S103).

Then, the work status monitoring apparatus 12 adjusts the resolution of the event network NW to a resolution specified by a user or the like (Step S104).

Then, the work status monitoring apparatus 12 converts the event network NW adjusted to a desired resolution into a DSM (Step S105).

Then, the work status monitoring apparatus 12 outputs information about the DSM (Step S106). The information about the DSM output from the work status monitoring apparatus 12 is transferred to the operation terminal 13, for example, through the network 50, and displayed on a monitor of the operation terminal 13.

As described above, the work status monitoring system 1 according to this embodiment adjusts a resolution of information about a work status, such as a DSM, to be presented to a user to a desired resolution, whereby it is possible to prevent specification of notable events, such as occurrences of abnormalities, from being difficult to perform even when, for example, there is a complicated work situation where a plurality of items of work are performed by a plurality of workers or work robots in a work area.

The present disclosure is not limited to the above-described embodiment and may be changed as appropriate without departing from the scope of the present disclosure.

Further, in the present disclosure, it is possible to implement all or part of processing performed by the work status monitoring apparatus 12 by causing a Central Processing Unit (CPU) to execute a computer program.

The above-described program includes instructions (or software codes) that, when loaded into a computer, cause the computer to perform one or more of the functions described in the embodiments. The program may be stored in a non-transitory computer readable medium or a tangible storage medium. By way of example, and not a limitation, non-transitory computer readable media or tangible storage media can include a Random-Access Memory (RAM), a Read-Only Memory (ROM), a flash memory, a Solid-State Drive (SSD) or other types of memory technologies, a CD-ROM, a Digital Versatile Disc (DVD), a Blu-ray (Registered Trademark) disc or other types of optical disc storage, and magnetic cassettes, magnetic tape, magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

From the disclosure thus described, it will be obvious that the embodiments of the disclosure may be varied in many ways. Such variations are not to be regarded as a departure from the scope of the disclosure, and all such modifications as would be obvious to one skilled in the art are intended for inclusion within the scope of the following claims.

## Claims

1. A work status monitoring system (1) comprising:
an event detection unit (122) configured to detect a plurality of events that have occurred in a work area (A1);
a network generation unit (124) configured to generate an event network composed of a plurality of nodes indicating the plurality of events detected by the event detection unit (122) and a plurality of edges indicating an order of generation of the plurality of nodes;
an adjustment unit (125) configured to adjust a resolution of the event network generated by the network generation unit (124) to a resolution specified by a user,
wherein the adjustment unit (125) is configured to combine nodes of events related within a specified degree of relation among the plurality of nodes into one node;
a conversion unit (126) configured to convert the event network of which the resolution has been adjusted by the adjustment unit (125) into a Design Structure Matrix, DSM, indicating an order of occurrences of a plurality of events based on the plurality of edges; and
an output unit (127) configured to output information about the DSM.

2. The work status monitoring system according to claim 1, wherein the output unit (127) outputs, as the information about the DSM, both the DSM generated based on the plurality of events detected by the event detection unit (122) and a DSM of a preset standard.

3. The work status monitoring system according to claim 1, wherein the output unit (127) outputs, as the information about the DSM, a status of a change in the DSM through a repetition of items of work.

4. The work status monitoring system according to claim 1, wherein the output unit (127) displays the information about the DSM on a monitor.

5. The work status monitoring system according to claim 1, wherein the adjustment unit (125) determines whether or not a first event represented by a first node, the first node being any one of the plurality of nodes, and a second event represented by a second node, the second node being another one of the plurality of nodes, are related within the specified degree of relation based on at least one of an object involved in an occurrence of each of the first and the second events, a time when each of the first and the second events has occurred, and a place where each of the first and the second events has occurred.

6. The work status monitoring system according to claim 1, wherein the event detection unit (122) detects the plurality of events that have occurred in the work area by using at least one of a distance measurement sensor and a camera.

7. A work status monitoring method performed by a computer, the work status monitoring method comprising:
detecting a plurality of events that have occurred in a work area;
generating an event network composed of a plurality of nodes indicating the plurality of detected events and a plurality of edges indicating an order of generation of the plurality of nodes;
adjusting a resolution of the generated event network to a resolution specified by a user, by combining nodes of events related within a specified degree of relation among the plurality of nodes into one node;
converting the event network of which the resolution has been adjusted into a Design Structure Matrix, DSM, indicating an order of occurrences of a plurality of events based on the plurality of edges; and
outputting information about the DSM.

8. A work status monitoring program for causing a computer to:
detect a plurality of events that have occurred in a work area;
generate an event network composed of a plurality of nodes indicating the plurality of detected events and a plurality of edges indicating an order of generation of the plurality of nodes;
adjust a resolution of the generated event network to a resolution specified by a user, by combining nodes of events related within a specified degree of relation among the plurality of nodes into one node;
convert the event network of which the resolution has been adjusted into a Design Structure Matrix, DSM, indicating an order of occurrences of a plurality of events based on the plurality of edges; and
output information about the DSM.

## Patentansprüche

1. Arbeitsstatusüberwachungssystem (1), umfassend:
eine Ereigniserkennungseinheit (122), die konfiguriert ist, um eine Vielzahl von Ereignissen zu erkennen, die in einem Arbeitsbereich (A1) aufgetreten sind;
eine Netzwerkerzeugungseinheit (124), die konfiguriert ist, um ein Ereignisnetzwerk zu erzeugen, das aus einer Vielzahl von Knoten, die die von der Ereigniserkennungseinheit (122) erkannte Vielzahl von Ereignissen anzeigen, und aus einer Vielzahl von Kanten, die eine Erzeugungsreihenfolge der Vielzahl von Knoten anzeigen, zusammengesetzt ist;
eine Anpassungseinheit (125), die konfiguriert ist, um eine Auflösung des von der Netzwerkerzeugungseinheit (124) erzeugten Ereignisnetzwerks auf eine von einem Benutzer spezifizierte Auflösung anzupassen,
wobei die Anpassungseinheit (125) konfiguriert ist, um Knoten von Ereignissen, die innerhalb eines spezifizierten Beziehungsgrades zueinander in Beziehung stehen, unter der Vielzahl von Knoten zu einem Knoten zusammenzufassen;
eine Umwandlungseinheit (126), die konfiguriert ist, um das Ereignisnetzwerk, dessen Auflösung durch die Anpassungseinheit (125) angepasst worden ist, in eine Design-Struktur-Matrix (DSM) umzuwandeln, die eine Reihenfolge des Auftretens einer Vielzahl von Ereignissen basierend auf der Vielzahl von Kanten angibt; und
eine Ausgabeeinheit (127), die konfiguriert ist, um Informationen über die DSM auszugeben.

2. Arbeitsstatusüberwachungssystem nach Anspruch 1, wobei die Ausgabeeinheit (127) als die Informationen über die DSM sowohl eine DSM, die basierend auf der von der Ereigniserkennungseinheit (122) erkannten Vielzahl von Ereignissen erzeugt ist, als auch eine DSM eines vorgegebenen Standards ausgibt.

3. Arbeitsstatusüberwachungssystem nach Anspruch 1, wobei die Ausgabeeinheit (127) als die Informationen über die DSM einen Zustand einer Änderung der DSM durch eine Wiederholung von Arbeitselementen ausgibt.

4. Arbeitsstatusüberwachungssystem nach Anspruch 1, wobei die Ausgabeeinheit (127) die Informationen über die DSM auf einem Monitor darstellt.

5. Arbeitsstatusüberwachungssystem nach Anspruch 1, wobei die Anpassungseinheit (125) bestimmt, ob ein erstes Ereignis, das durch einen ersten Knoten dargestellt ist, wobei der erste Knoten einer der Vielzahl von Knoten ist, und ein zweites Ereignis, das durch einen zweiten Knoten dargestellt ist, wobei der zweite Knoten ein anderer der Vielzahl von Knoten ist, innerhalb des spezifizierten Beziehungsgrades zueinander in Beziehung stehen, wobei diese Bestimmung basierend auf mindestens einem von einem Objekt, das an einem Auftreten jedes von dem ersten und dem zweiten Ereignis beteiligt ist, einer Zeit, zu der jedes von dem ersten und dem zweiten Ereignis aufgetreten ist, und eines Ortes, an dem jedes von dem ersten und dem zweiten Ereignis aufgetreten ist, erfolgt.

6. Arbeitsstatusüberwachungssystem nach Anspruch 1, wobei die Ereigniserkennungseinheit (122) die Vielzahl von Ereignissen, die in dem Arbeitsbereich aufgetreten sind, unter Verwendung von mindestens einem von einem Abstandsmesssensor und einer Kamera erkennt.

7. Arbeitsstatusüberwachungsverfahren, das von einem Computer ausgeführt wird, wobei das Arbeitsstatusüberwachungsverfahren umfasst:
Erkennen einer Vielzahl von Ereignissen, die in einem Arbeitsbereich aufgetreten sind;
Erzeugen eines Ereignisnetzwerks, das aus einer Vielzahl von Knoten, die die erkannte Vielzahl von Ereignissen anzeigen, und aus einer Vielzahl von Kanten, die eine Erzeugungsreihenfolge der Vielzahl von Knoten anzeigen, zusammengesetzt ist;
Anpassen einer Auflösung des erzeugten Ereignisnetzwerks auf eine von einem Benutzer spezifizierte Auflösung, indem Knoten von Ereignissen, die innerhalb eines spezifizierten Beziehungsgrades zueinander in Beziehung stehen, unter der Vielzahl von Knoten zu einem Knoten zusammengefasst werden;
Umwandeln des Ereignisnetzwerks, dessen Auflösung angepasst worden ist, in eine Design-Struktur-Matrix (DSM), die eine Reihenfolge des Auftretens einer Vielzahl von Ereignissen basierend auf der Vielzahl von Kanten angibt; und
Ausgeben von Informationen über die DSM.

8. Arbeitsstatusüberwachungsprogramm, das einen Computer zu Folgendem veranlasst:
eine Vielzahl von Ereignissen zu erkennen, die in einem Arbeitsbereich aufgetreten sind;
ein Ereignisnetzwerk zu erzeugen, das aus einer Vielzahl von Knoten, die die erkannte Vielzahl von Ereignissen anzeigen, und aus einer Vielzahl von Kanten, die eine Erzeugungsreihenfolge der Vielzahl von Knoten anzeigen, zusammengesetzt ist;
eine Auflösung des erzeugten Ereignisnetzwerks auf eine von einem Benutzer spezifizierte Auflösung anzupassen, indem Knoten von Ereignissen, die innerhalb eines spezifizierten Beziehungsgrades zueinander in Beziehung stehen, unter der Vielzahl von Knoten zu einem Knoten zusammengefasst werden;
das Ereignisnetzwerk, dessen Auflösung angepasst worden ist, in eine Design-Struktur-Matrix (DSM) umzuwandeln, die eine Reihenfolge des Auftretens einer Vielzahl von Ereignissen basierend auf der Vielzahl von Kanten angibt; und
Informationen über die DSM auszugeben.

## Revendications

1. Système de surveillance d'état de travail (1) comprenant :
une unité de détection d'événements (122) configurée pour détecter une pluralité d'événements qui se sont produits dans une zone de travail (A1) ;
une unité de génération de réseau (124) configurée pour générer un réseau d'événements composé d'une pluralité de nœuds indiquant la pluralité d'événements détectés par l'unité de détection d'événements (122) et d'une pluralité d'arêtes indiquant un ordre de génération de la pluralité de nœuds ;
une unité d'ajustement (125) configurée pour ajuster une résolution du réseau d'événements généré par l'unité de génération de réseau (124) à une résolution spécifiée par un utilisateur,
dans lequel l'unité d'ajustement (125) est configurée pour combiner des nœuds d'événements liés dans un degré de relation spécifié parmi la pluralité de nœuds en un seul nœud ;
une unité de conversion (126) configurée pour convertir le réseau d'événements dont la résolution a été ajustée par l'unité d'ajustement (125) en une matrice de structure de conception, DSM, indiquant un ordre d'occurrences d'une pluralité d'événements sur la base de la pluralité d'arêtes ; et
une unité de sortie (127) configurée pour émettre des informations sur la DSM.

2. Système de surveillance d'état de travail selon la revendication 1, dans lequel l'unité de sortie (127) émet, en tant qu'informations concernant la DSM, à la fois la DSM générée sur la base de la pluralité d'événements détectés par l'unité de détection d'événements (122) et une DSM d'une norme prédéterminée.

3. Système de surveillance d'état de travail selon la revendication 1, dans lequel l'unité de sortie (127) émet, en tant qu'informations concernant la DSM, un état d'un changement dans la DSM par une répétition d'éléments de travail.

4. Système de surveillance d'état de travail selon la revendication 1, dans lequel l'unité de sortie (127) affiche les informations concernant la DSM sur un moniteur.

5. Système de surveillance d'état de travail selon la revendication 1, dans lequel l'unité d'ajustement (125) détermine si oui ou non un premier événement représenté par un premier nœud, le premier nœud étant l'un quelconque de la pluralité de nœuds, et un second événement représenté par un second nœud, le second nœud étant un autre nœud de la pluralité de nœuds, sont liés dans le degré de relation spécifié sur la base d'au moins un objet impliqué dans une occurrence de chacun des premier et second événements, d'un moment où chacun des premier et second événements s'est produit, et d'un endroit où chacun des premier et second événements s'est produit.

6. Système de surveillance d'état de travail selon la revendication 1, dans lequel l'unité de détection d'événements (122) détecte la pluralité d'événements qui se sont produits dans la zone de travail en utilisant au moins l'un d'un capteur de mesure de distance et d'une caméra.

7. Procédé de surveillance d'état de travail exécuté par un ordinateur, le procédé de surveillance d'état de travail comprenant :
la détection d'une pluralité d'événements survenus dans une zone de travail ;
la génération d'un réseau d'événements composé d'une pluralité de nœuds indiquant la pluralité d'événements détectés et d'une pluralité d'arêtes indiquant un ordre de génération de la pluralité de nœuds ;
l'ajustement d'une résolution du réseau d'événements généré à une résolution spécifiée par un utilisateur, en combinant des nœuds d'événements liés dans un degré de relation spécifié entre la pluralité de nœuds en un seul nœud ;
la conversion du réseau d'événements dont la résolution a été ajustée en une matrice de structure de conception, DSM, indiquant un ordre d'occurrences d'une pluralité d'événements sur la base de la pluralité d'arêtes ; et
l'émission d'informations sur la DSM.

8. Programme de surveillance d'état de travail pour faire en sorte qu'un ordinateur :
détecte une pluralité d'événements qui se sont produits dans une zone de travail ;
génère un réseau d'événements composé d'une pluralité de nœuds indiquant la pluralité d'événements détectés et d'une pluralité d'arêtes indiquant un ordre de génération de la pluralité de nœuds ;
ajuste une résolution du réseau d'événements généré à une résolution spécifiée par un utilisateur, en combinant des nœuds d'événements liés dans un degré de relation spécifié entre la pluralité de nœuds en un seul nœud ;
convertisse le réseau d'événements dont la résolution a été ajustée en matrice de structure de conception, DSM, indiquant un ordre d'occurrences d'une pluralité d'événements sur la base de la pluralité d'arêtes ; et émette des informations sur la DSM.
